# EUROPEAN PATENT SPECIFICATION

(11) **EP 2 658 781 B1**
(45) Date of publication and mention of the grant of the patent: **11.03.2015**
(21) Application number: 11802382.9
(22) Date of filing: 19.12.2011
(51) Int. Cl.: B65B 59/00, B65B 65/00, B67C 3/22, B67C 7/00

(54) **A METHOD FOR ASSEMBLING A MODULAR SUPPORT STRUCTURE OF AN ITEM-PROCESSING MACHINE AND MODULAR STRUCTURE OF AN ITEM-PROCESSING MACHINE**
VERFAHREN ZUM ZUSAMMENBAU EINER MODULAREN TRAGESTRUKTUR EINER BEHANDLUNGSMASCHINE FÜR GEGENSTÄNDE SOWIE MODULARE TRAGESTRUKTUR EINER BEHANDLUNGSMASCHINE FÜR GEGENSTÄNDE
PROCEDE D'ASSEMBLAGE D'UNE STRUCTURE DE SUPPORT MODULAIRE D'UNE MACHINE DE TRANSFORMATION D'ARTICLES ET STRUCTURE MODULAIRE D'UNE MACHINE DE TRANSFORMATION D'ARTICLES

(30) Priority: 28.12.2010 IT TO20101074
(43) Date of publication of application: 06.11.2013
(73) Proprietor: Sidel S.p.A. Con Socio Unico, Parma (IT)
(72) Inventor: ANDREATO, Cristian, 43100 Parma (IT); CARMICHAEL, James, 43100 Parma (IT); GIULIANI, Gabriele, 43100 Parma (IT)
(74) Representative: Di Sciuva, Michele
(86) International application number: PCT/EP2011/073305
(87) International publication number: WO 2012/089548

(56) References cited:
- WO-A1-2010/013263
- DE-U1-202005 002 470

## Description

### TECHNICAL FIELD

The present invention relates to a method for assembling a modular support structure of an item-processing machine and, correspondingly, to a modular support structure of an item-processing machine.

More particularly, the invention refers to a method for assembling a support structure of a container-processing machine, e.g. for use with cans, bottles and the like.

### BACKGROUND ART

In general, systems such as bottling/packaging systems for liquid or powder products provide for the performance of a sequence of different processing operations on a potentially very high number of items. For example, in a typical bottling system, containers are typically washed/rinsed, filled with a corresponding product, capped/closed, labelled, etc. in an automatic manner, in order to then be prepared for shipment and sale.

Therefore, for this purpose, the product bottling/packaging systems usually comprise machines which receive a plurality of items to perform on them a given operation, the items being then transferred to another section of the system.

The end user, typically a food industry, is faced with the need for the machinery of the bottling/packaging systems to be compatible with the logistic limits entailed by the size and shape of the space available for said machinery and the various processes.

In particular, an effort is currently being made by the producers of item-processing machines to provide machines that ensure high flexibility, both in terms of adaptability to different production lines having specific process features and of adaptability to production spaces having different size and shape.

Besides, from the standpoint of producers, the considerable size of item-processing machines translates in significant difficulties related to transport and installation of the machinery at the end user's headquarters.

Accordingly, machines having a modular structure (see e.g. WO 2010/013263 A1) are becoming increasingly popular, because their modularity serves both the purpose of adaptability to the specific needs of the end user and to the logistic constraints discussed above as well as the purpose of making transportation and storage more convenient for producers.

On the other hand, however, most item-processing machines comprise a plurality of means for conveying the items to be processed along a predetermined item path, which is typically defined at least partly by the very same conveying means and, more often than not, by areas of at least partial operative engagement of different conveying means. In particular, item-processing machines typically comprise a rotating carousel which carries the items to be processed along a portion of the item path which is locally defined by the peripheral portion of the carousel, said portion of the item path typically comprising the very processing stations at which certain given operations are performed on the items. To this purpose, an item-processing machine typically also comprises one or more processing units arranged about the carousel in a predetermined reciprocal position, so that the processing stations are basically defined by the areas of operative engagement of the peripheral portion of the carousel with the processing units.

Furthermore, an item-processing machine of the type briefly outlined above generally comprises feed-in and feed-out conveying means for transferring the items to be processed to the carousel and for receiving the processed items from the carousel, respectively.

Typically, these feed-in and feed-out conveying means comprise one or more star wheels, which are rotatably mounted about shafts substantially parallel to an axis of rotation of the carousel. Accordingly, other portions of the item path are defined by the trajectory followed upon rotation by the peripheral portions (i.e. the prongs) of said star wheels.

In greater detail, a known item-processing machine comprises a carousel and two pairs of star wheels. In particular, one pair of star wheels shall serve the purpose of feeding the items to be processed to the carousel, whereas the other pair shall receive the processed items from the carousel to subsequently advance them to another section of the plant of which item-processing machine forms part.

It shall appear that correct reciprocal positioning of the various moving parts of an item-processing machine of this type is crucial, seeing how proper engagement of consecutive - with respect to the item path - conveying means, be they a pair of star wheels or a star wheel and the carousel, is at the basis of proper operation of the machine.

Whilst achieving the correct reciprocal positioning of the hubs bearing the shafts of the different moving parts would be rather straightforward, were the support structure of the machine be manufactured as a single piece, producers are faced with a way more problematic scenario when dealing with modular structures.

In fact, producers have to ensure that the different modules forming the item-processing machine can be quickly and easily assembled at the end user's headquarters with the necessary degree of precision as concerns reciprocal positioning and fixing of the various modules, in particular with reference to the hubs which shall bear the shafts of the different rotating conveying means, but also as far as placement of processing units about the carousel is concerned.

This may be achieved by designing with extreme accuracy all the parts which will form the support structure of an item-processing machine, as well as all the fastening means to be used to connect said parts to one another, as finely toleranced elements.

However, not only has this approach the disadvantage of requiring the uttermost precision during the whole design and manufacture phases, but also makes it essential that all assembling operations be performed by highly skilled and trained personnel, so that the very high degree of accuracy required when arranging and fixing the modular elements of the support structure of the item-processing machine can be effectively ensured at all times.

In other words, the whole design, manufacture and assembly process becomes particularly complex, lengthy, time-consuming and cumbersome for producers and, consequently, it also results into an undesirable increase of costs for end-users, as well.

The need is therefore felt, in the art, for a method for assembling an item-processing machine and, more particularly, a support structure of an item-processing machine, whereby the drawback described above can be overcome in straightforward and relatively inexpensive fashion.

More particularly, the need is felt for a method for assembling the modular elements of a support structure of an item-processing machine, whereby correct reciprocal positioning and fixing of the elements which shall bear moving, and more particularly rotating, parts of the item-processing machine can be effectively achieved with the accuracy required for ensuring proper operation of the machine, whilst eliminating the need of resorting to finely toleranced parts and of entrusting the assembling operations to highly skilled personnel.

### DISCLOSURE OF INVENTION

It is therefore an object of the present invention to provide a method for assembling a modular support structure of an item-processing machine which satisfies at least one of the above needs.

This object is achieved by a method for assembling a modular support structure of an item-processing machine as claimed in claim 1.

Furthermore, this object is achieved by a modular support structure for an item-processing machine as claimed in claim 8, and by the kit of claim 16.

### BRIEF DESCRIPTION OF THE DRAWINGS

A non-limiting embodiment of the present invention will be described by way of example with reference to the accompanying drawings, in which:
Figure 1 shows a schematic top view of a modular structure for a modular item-processing machine according to the invention;
Figure 2 shows a partial schematic side view of the modular structure of Figure 1;
Figure 3 shows a schematic perspective detail in enlarged scale of the connection of a processing unit to a carousel hub in a modular structure of an item-processing machine according to the invention;
Figure 4 shows a partial schematic side view of the detail of Figure 3;
Figure 5 shows a schematic detail of the connection of a transverse link element and a hub in a structure of the item-processing machine of Figure 1;
Figure 6 shows a partial side view of the detail of Figure 5; and
Figure 7 shows a detail of an alternative of the connection of Figures 5 and 6.

### BEST MODE FOR CARRYING OUT THE INVENTION

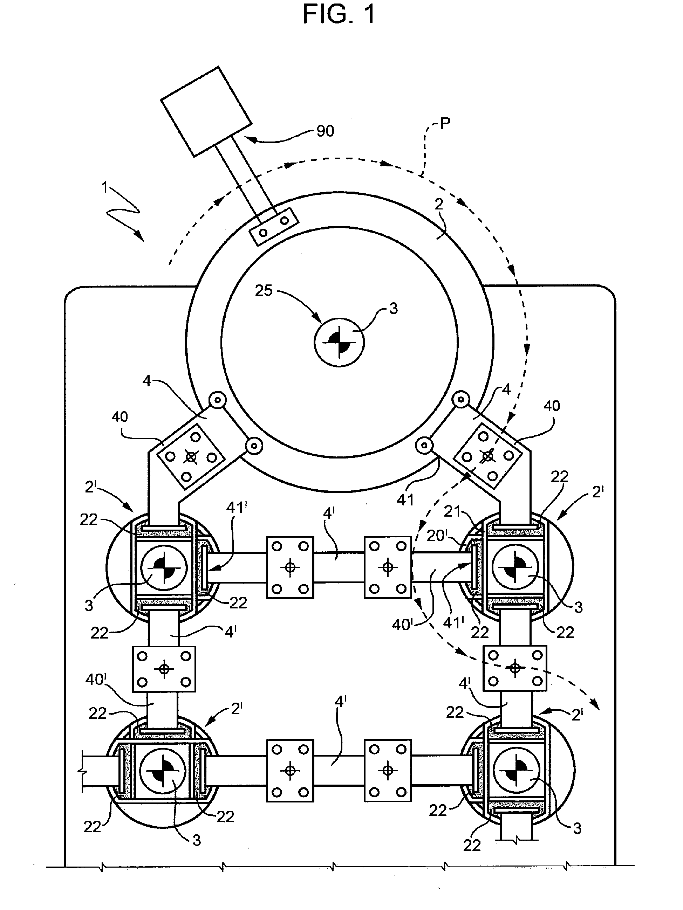

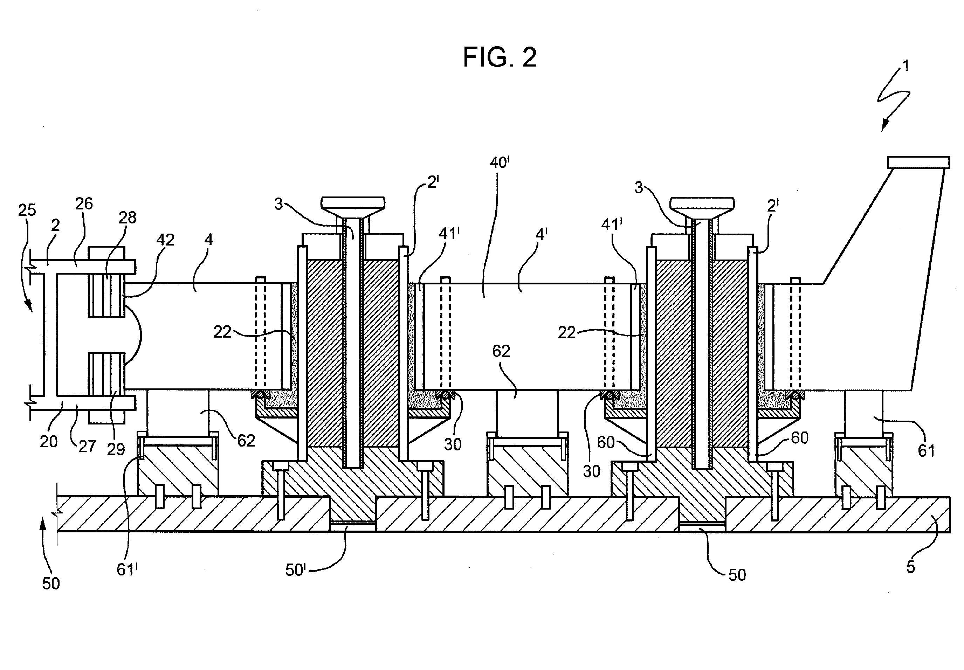

Number 1 in Figures 1 and 2 indicates as a whole a modular support structure of a modular item-processing machine.

Modular support structure 1 comprises at least a first and a second hub 2, 2' adapted to bear a respective shaft 3, 3' upon which a moving member (not shown) of an item-processing machine shall be rotatably mounted.

More particularly, first hub 2 is a carousel boss hub adapted to bear and support a carousel (not shown) of the item-processing machine, whereas the second hub 2' is adapted to rotatably bear and support a conveying means, e.g. for feeding the items to be processed to the carousel.

First hub 2 comprises a central hub boss 25 arranged between an upper and a lower (with respect to the drawing orientation) flange 26,27 projecting radially outwardly from said central hub boss 25.

Upper and lower flanges 26,27 have a respective plurality of bores 28,29 arranged about the periphery of each respective flange. Upper and lower flanges 26,27 of first hub 2 define a respective upper and lower fixing portions of first hub 2.

In the case illustrated in Figure 1, modular support structure 1 comprises four distinct second hubs 2', each of which is intended for rotatably bearing and supporting a star wheel (not shown). A dotted line in Figure 1 indicates a possible item path P which shall be defined, in use, by the peripheral portions of the carousel and of the star wheels.

Furthermore, modular support structure 1 comprises a plurality of link elements 4, 4' adapted to be arranged substantially transversely with respect to the axes of the first and second hubs 2, 2'. Each link element 4, 4' is designed to be fixable at its respective ends to a pair of hubs 2, 2'.

More particularly, each link element 4' is intended to be arranged between, and fixed at, a respective pair of second hubs 2'. On the other hand, each link element 4 is intended to be arranged between, and fixed at its ends, at a first and a second hub 2, 2', respectively.

Each link element 4' has a main body 40' and end fixing portions 41'. Fixing portions 41' comprise means for engaging with the respective hubs 2' at which they are to be fixed. For example, the engaging means of fixing portion 41' may comprise flanges.

Similarly, each link element 4 has a main body 40 and end fixing portions 41 and 42 (Figure 2). Similar to fixing portions 41', fixing portions 41 are intended for engaging with respective hubs 2' at which they are to be fixed and comprise, to this purpose, engaging means - which may, for example, be in the form of flanges.

On the other hand, fixing portion 42 is intended for engaging with hub 2 at which it is to be fixed.

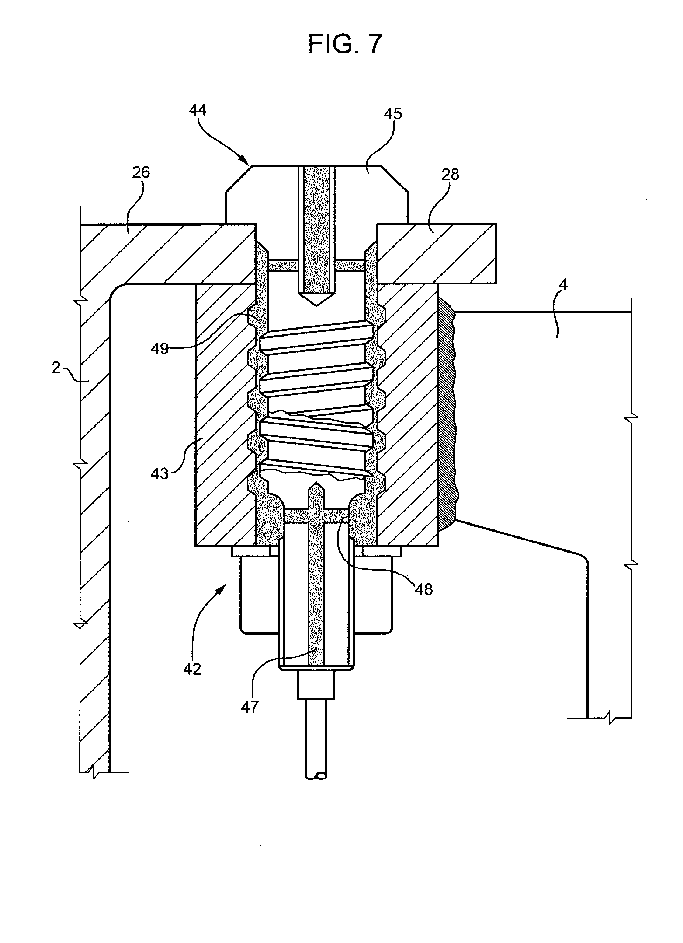

More particularly, fixing portion 42 is specifically designed in view of the geometry of hub 2, as shall be described in greater detail in the following, with further reference to Figure 7.

Advantageously, exact reciprocal positioning of hubs 2, 2' of modular support structure 1 is achieved by (Figure 2) :
- providing a toleranced jig plate 5 having a plurality of means 50, 50' for defining precisely the definitive boss position of a respective hub 2, 2' within modular support structure 1;
- arranging hubs 2, 2' at their respective boss positions defined by boss position defining means 50, 50' of jig plate 5;
- arranging link elements 4, 4' in loose engagement with hubs 2, 2' so as to form a temporary skeleton of modular support structure 1; and
- fixing link elements 4, 4' to respective fixing portions of hubs 2, 2' via injection and subsequent hardening of a curable resin, thereby obtaining, from the temporary skeleton, an integral support structure of the item processing machine.

In particular, as illustrated in Figures 1 and 2, boss position defining means 50, 50' may comprise toleranced openings provided in jig plate 5.

Each hub 2' advantageously comprises a plurality of fixing portions 20'. Each fixing portion 20' of each hub 2' at least partially defines, either internally or externally with respect to a peripheral wall 21 of the hub 2', a volume 22 adapted to receive in loose engagement a corresponding fixing portion 41, 41' of a link element 4 and fillable with a curable resin.

By way of example, reference is made to the embodiment illustrated in Figure 1, wherein each hub 2' internally defines three distinct volumes 22 arranged about a longitudinal axis of the hub 2' so that the hub 2' is conveniently couplable with link elements 4, 4' so that two link elements 4, 4' are parallel to one another whereas a third link element 4, 4' is orthogonal to the other two.

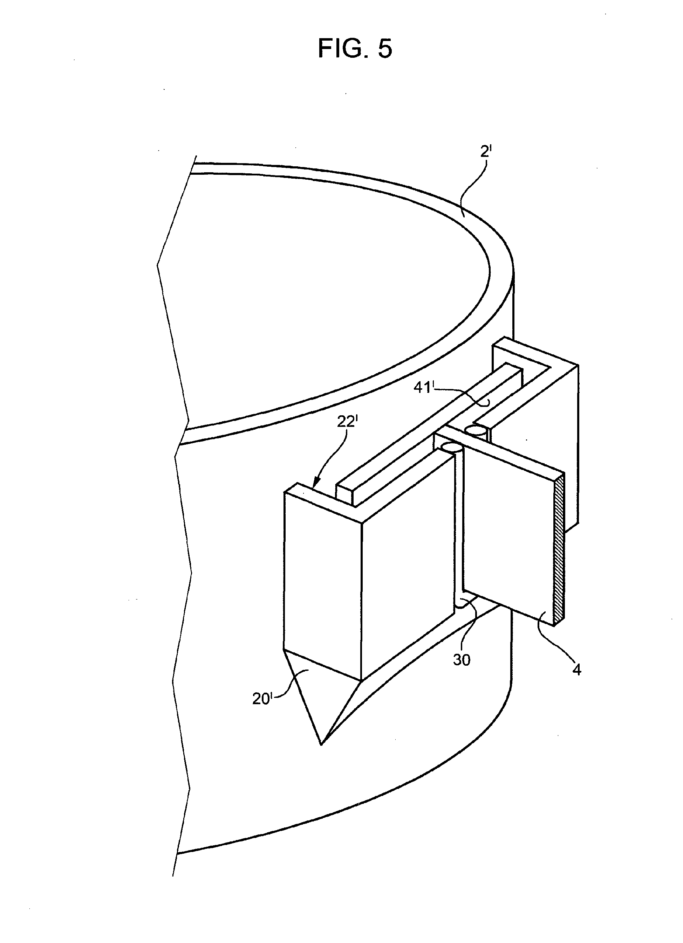

Figure 5 shows in greater detail an alternative embodiment, wherein fixing portion 20' of hub 2' defines a volume 22 externally with respect to the peripheral wall 21 of the hub 2'. In particular, fixing portion 20' comprises, in this case, a substantially box-shaped member which is vertically open at its top and is provided with a lateral vertical slit for loose engagement with a corresponding fixing portion 41, 41' of a link element 4, 4'.

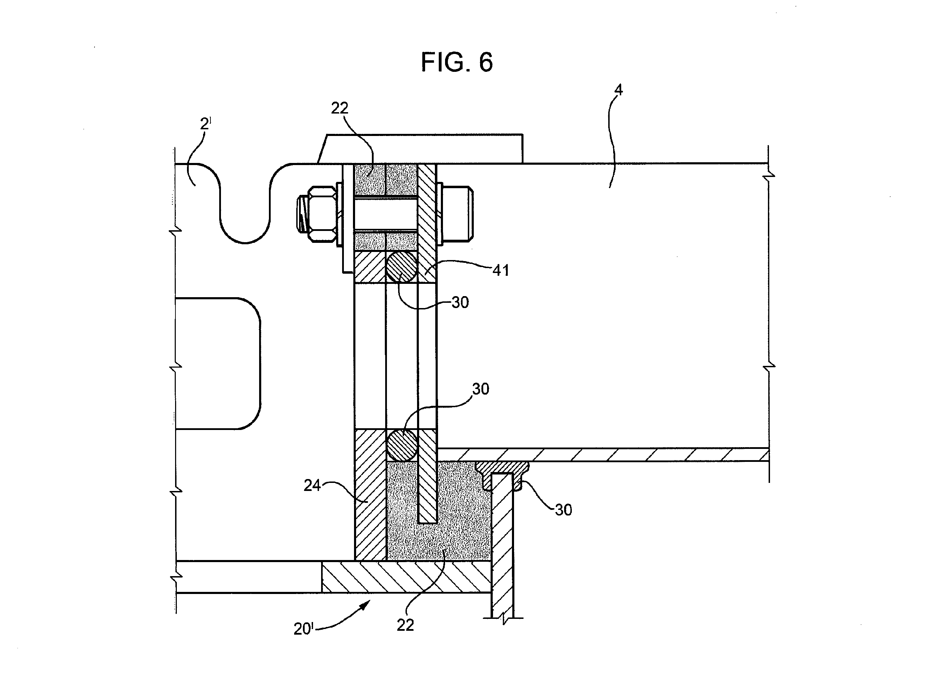

Figure 6, furthermore, shows how, prior to injecting curable resin into volume 22, fixing portion 41, 41' of link element 4 may provisionally be fastened with play to a fastening portion 24 of hub 2, 2' which partially defines volume 22, e.g. by means of bolts.

Advantageously, this provisional fastening provides for improved reciprocal stability upon resin injection and hardening.

Figure 7 shows in greater detail how fixing of a link element 4 with hub 2 may be achieved, accounting for the particular carousel boss hub geometry.

In particular, fixing portion 42 of link element 4 comprises at least one sleeve member 43 which is adapted to receive a fastening pin 44 and can loosely engage with at least one of the upper and lower flanges 26,27 of hub 2 substantially at one of the bores 28,29. As illustrated in Figure 7, fixing portion 42 of link element 4 preferably comprises a pair of sleeve member 43 at an end of link element 4. Therefore, a corresponding pair of fastening pins 44 are preferably provided for connection.

Fastening pin 44 comprises a head 45 and a main body 46. Both head 45 and main body 46 are internally hollow, a filling duct 47 being defined within fastening pin 44 and extending all along its length. Furthermore, fastening pin 44 comprises at least one pair of filling channels 48 extending substantially radially from the filling duct 47 through to the outer surface of main body 46.

Fastening pin 44 and sleeve member 43 are designed such that play exists between their respective outer and inner surfaces so that, when operatively coupled, a free substantially annular volume 49 is defined.

Annular volume 49 is fillable with a curable resin which may be injected through filling duct 47 and filling channels 48, e.g. from a bottom end of fastening pin 44 - as illustrated in Figure 7 - so that complete filling of annular volume 49 may be conveniently detected when the curable resin overflows at the opposite end (e.g. at head 45). Preferably, a removable fill tube may be employed to be coupled with filling duct 47 at head 45 for a more practical detection of occurrence of said condition of overflow. For improved fixing, the outer surface of main body 46 of fastening pin 4 and/or the inner surface of sleeve member 43 may advantageously be threaded, so that a greater surface may be exposed to the curable resin. Consequently a greater fastening force may be exchanged between link element 4 and first hub 2.

It should be noted that all hubs 2, 2' and link elements 4, 4' are designed such that their respective fixing portions are mutually engageable in loose fashion.

In the context of the invention, the expression "engageable in loose fashion" is intended to mean that a significant a play between corresponding pairs of engaging surfaces is always present, when hubs 2, 2' and link elements 4, 4' are arranged in accordance with the reciprocal positions as defined the hub position defining means 50, 50' of jig plate 5.

Therefore, for the process of injection and further hardening of the fixing resin to be fully effective, flexible sealing elements 30 are preferably provided to be arranged between corresponding pairs of engaging surfaces of the fixing portions of hubs 2, 2' and link elements 4, 4'. Thus, the curable resin may conveniently be injected into the volumes 22 without undesirable spillages.

By way of example, as illustrated in Figure 2, sealing elements 30 may be placed between the bottom (with respect to the drawing orientation) and/or lateral surfaces of link elements 4, 4' and the fixing portion 20' of hubs 2'. Preferably, sealing elements 30 are made of a flexible material.

Similarly, sealing elements 30 may be provided between fixing portions 42 and flanges 26,27 of link element 4 and hub 2, respectively.

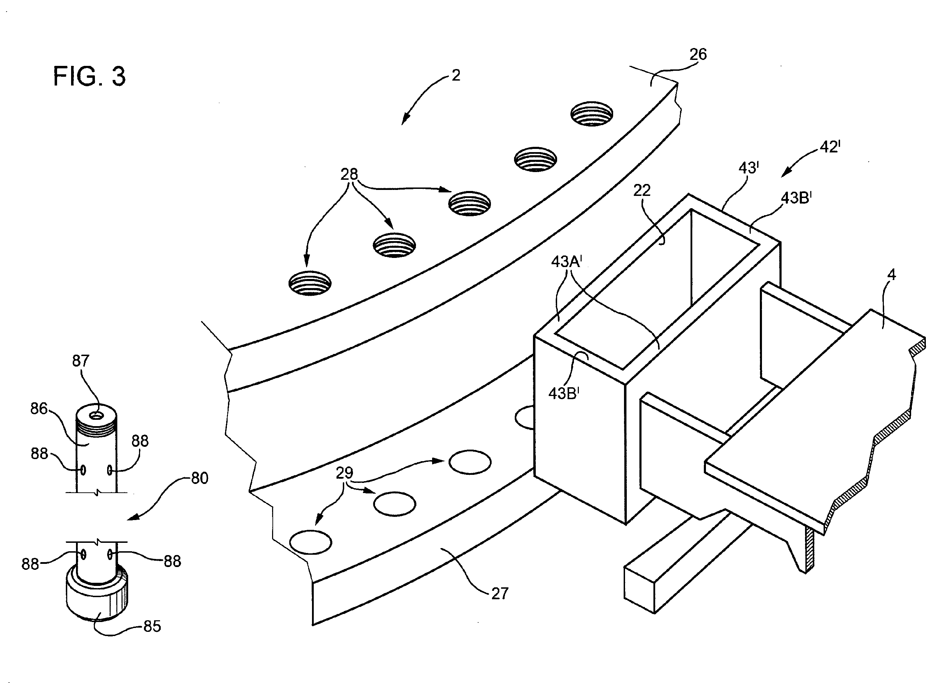

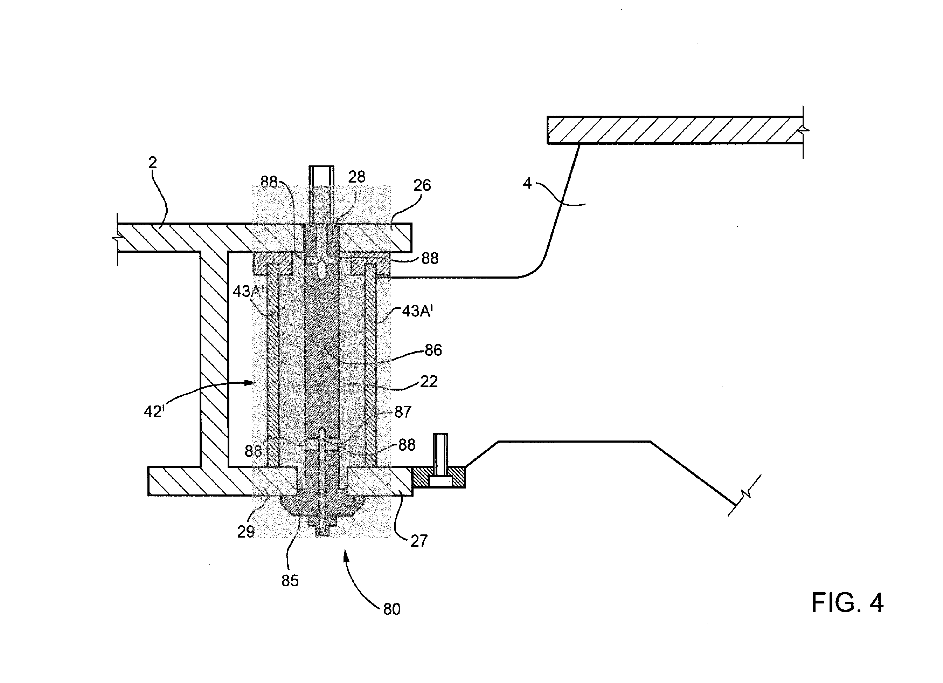

Figures 3 and 4 show an alternative configuration for fixing a link element 4 with hub 2, which also accounts for the particular carousel boss hub geometry.

The connection between first hub 2 and link element 4 illustrated in Figures 3 and 4 is similar to that of Figure 7, and is described below only insofar as it differs from the latter, and using the same reference numbers, where possible, for identical or corresponding parts of said connection.

More specifically, link element 4 of Figures 3 and 4 differs from that of Figure 7 in that fixing portion 42' comprises a box-shaped member 43' internally defining a substantially parallelepiped volume 22' fillable with a curable resin.

In particular, box-shaped member 43' comprises two pairs 43A' and 43B' of opposite walls respectively parallel to one another and having a height such that the box-shaped member is engageable in loose fashion between with the upper and lower flanges 26,27 of hub 2.

Furthermore, box-shaped member 43' is vertically open, i.e. it is open at its top and bottom end, so that at least one opening is available for injection of the curable resin upon engagement with flanges 26, 27.

For fixing of fixing portion 42' to first hub 2, at least one injection pin 80 is provided which - as shown in Figure 4 - is intended for being inserted through one of the bores 28,29 so as to project into volume 22' when fixing portion 42' is arranged so as to engage loosely between upper and lower flanges 26,27 of hub 2.

Injection pin 80 comprises a head 85 and a main body 86. Both head 85 and main body 86 are internally hollow, a filling duct 87 being defined within injection pin 80 and extending all along its length. Furthermore, injection pin 80 comprises at least one pair of filling channels 88 extending substantially radially from the filling duct 87 through to the outer surface of main body 86.

Preferably, injection pin 80 is not sized for achieving direct fastening of hub 2 and fixing portion 42'. In particular, the diameter of main body 86 is smaller than the diameter of bores 28,29.

Accordingly, flexible sealing elements 30' are preferably provided to be arranged between corresponding pairs of engaging surfaces of fixing portion 42' and flanges 26,27, thereby blocking all but one access pathway for the curable resin to be conveniently injected into volume 22' without undesirable spillages.

By way of example, as illustrated in Figure 4, sealing elements 30 may be placed between the upper (with respect to the drawing orientation) flange 26 and the uppermost portion of the pairs of walls 43A' and 43B', as well as about main body 86 of injection pin 80. Preferably, sealing elements 30 are made of a flexible material.

The curable resin may advantageously be injected from below, as shown in Figure 4, so that the level of the resin within volume 22 grows progressively until reaching the upper flange 26 and, optionally, overflowing through a suitable fill-indicator tube.

Because of the much greater amount of curable resin to be used with the alternative connection configuration of Figures 3 and 4, with respect to the limited amount used within the sleeve members of Figure 7, a greater fastening force may be attained with this alternative.

Advantageously, therefore, the connection configuration of Figures 3 and 4 may also be used (see Figure 1 for a schematic illustration) for fixing to carousel hub 2 a processing unit support arm 90 intended to be cantilevered from the carousel hub 2 itself, because it is especially compatible with the weight associated therewith. In particular, after proper hardening of the curable resin, such a processing unit support arm shall ultimately form a permanently integral part of modular support structure 1, in that the resulting modular support structure 1 as a whole shall thus become adapted to support a corresponding processing unit (not shown).

Advantageously, a processing unit support arm 90 may be selectively fixed to carousel hub 2 at one or more bores 28,29, so that the relative position of the processing unit which shall be borne by arm 90 with respect to the article path P defined about carousel hub 2 may be correspondingly adjusted to the user's needs, e.g. in terms of production requirements and/or space constraints.

Referring back to Figure 1, hubs 2, 2' are preferably precisely arranged at their respective boss positions as defined by the openings 50, 50' of jig plate 5 in an inverted position. In other words, according to the method provided herein, a modular support structure 1 is preferably assembled upside-down, the machined top surfaces of hubs 2, 2' facing downwards.

As a consequence, all surfaces which are to receive curable resin shall not be visible once the processing machine is completely assembled. Furthermore, the machined surfaces which are to directly cooperate with the moving parts (e.g. carousel, star wheels, etc.) shall be protected from resin spilling and other undesirable forms of contamination which could impair coupling precision between moving parts and modular support structure 1.

More particularly, the machined top surfaces of hubs 2, 2' face or even cooperate, directly or indirectly, with jig plate 5.

Preferably, the machined top surfaces of hubs 2, 2' are at least locally fastened in releasable fashion to the jig plate 5 through temporary clamping means 60.

Similarly, link elements 4, 4' are preferably fastened in releasable fashion, directly or indirectly, to jig plate 5. By way of example, as illustrated in Figure 2, temporary removable link-jig connections 61 are provided, which serve the purpose of provisionally supporting link elements 4, 4' upon manufacture of modular support structure 1 and, in particular, during hardening of the curable resin.

In particular, link-jig connections 61 may advantageously cooperate, as shown in Figure 2, with service portions 62 provided in link elements 4, 4', and substantially centrally located with respect to main body 40'. Service portions 62 may then be used for supporting other elements of the item-processing machine to be manufactured.

Furthermore, temporary legs may be provided for supporting link elements 4, 4', any processing unit support arm 80 or even carousel boss hub 2 during the phases of resin injection and hardening.

The advantages entailed by the method and modular support unit 1 according to the present invention will be apparent from the foregoing description.

In particular, designing a support structure for an item processing machine as a set of modular elements to be shipped as separate pieces - which results in a reduction of transportation costs and of storage space - and to be assembled at the end user's headquarters is made particularly advantageous. In fact, according to the method of the invention, assembling operations are made easy to perform with standard skills and virtually no hazards.

Secondly, manufacturing of the various modular elements forming the support structure 1 is also made less complex and demanding for producers, because the requirement for toleranced surfaces is limited to the portions in direct contact with the jig plate 5 (as well as to jig plate 5 itself), hence all other mutually engaging parts (e.g. fixing portions of hubs and link elements) need not be worked and finished as precisely and accurately as required with conventional methods.

On the other hand, as a direct consequence of implementation of the method of the invention, all accurately machined and toleranced surfaces are protected from interaction with the curable resin, in that, whilst assembling operations are performed, they face, or even provisionally cooperate with, the jig plate or other temporary supporting members (e.g. legs). Accordingly, said surfaces are easily maintained smooth and clean.

Also, the method and modular support structure of the invention allow for easy and selective designing and coupling of carousel boss hub 2 with one or more processing units in that one or more relative support arms 80 may be fixed in a straightforward and inexpensive to hub 2 so as to ultimately form an integral support structure 1 which also comprises the processing section of the machine.

Clearly, changes may be made to unit 1 as described and illustrated herein without, however, departing from the scope defined in the accompanying Claims.

## Claims

1. A method for assembling a modular support structure (1) of an item-processing machine; said structure (1) comprising at least a first and a second hub (2, 2') adapted to bear a respective shaft (3, 3') with which a moving member of an item-processing machine is to be operatively coupled, and a plurality of link elements (4, 4') adapted to be arranged transversely with respect to the axes of said hubs (2, 2') and fixable at their respective ends to a relative pair of said hubs (2, 2'); said link elements (4, 4') being adapted to engage with the respective hubs (2, 2') at which they are adapted to be fixed; the method being **characterised by** comprising the steps of:
a) providing a toleranced jig plate (5) having a plurality of means (50, 50') for defining precisely the definitive boss position of respective said hubs (2, 2') within said modular support structure (1);
b) providing fixing portions (20; 26,27) integral with said hubs (2, 2') and fixing portions (41, 41'; 42, 42') integral with said link elements (4, 4'), said fixing portions (20; 26, 27; 41, 41'; 42, 42') defining at least one volume (22; 49) adapted to receive in loose engagement a respective fixing portion and fillable with a curable resin;
c) arranging hubs (2, 2') at their respective boss positions defined by said boss position defining means (50, 50') of said jig plate (5);
d) arranging said link elements (4, 4') in loose engagement with said hubs (2, 2'), so as to form a temporary skeleton of a modular support structure; and
e) permanently fixing said link elements (4, 4') to respective fixing portions of hubs (2, 2') via injection and subsequent hardening of a curable resin, thereby obtaining, from said temporary skeleton, an integral support structure.

2. The method according to Claim 1, wherein the step d) of arranging said link elements (4, 4') in loose engagement with said hubs (2, 2') comprises providing fastening means (80; 42) for loosely connecting mutually engaging fixing portions (20; 26,27; 41, 41'; 42, 42').

3. The method according to Claim 1 or 2, wherein the step c) of arranging said hubs (2, 2') at their respective boss positions defined by said boss position defining means (50, 50') of said jig plate (5) comprises providing temporary support elements (60, 61, 62) for said hubs (2, 2').

4. The method according to Claim 3, wherein said step c) of further comprises providing clamping means for provisionally fastening said hubs (2, 2') at their respective boss positions and or said link elements (4, 4') in loose engagement with respective hubs (2, 2').

5. The method according to any one of Claims 1 to 4, wherein the steps c) of arranging said hubs (2, 2') at their respective boss positions defined by said boss position defining means (50, 50') of said jig plate (5) and the step d) of arranging said link elements (4, 4') in loose engagement with said hubs (2, 2') comprise arranging said hubs (2, 2') and link elements (4, 4') in an inverted position.

6. The method according to any one of Claims 1 to 5, comprising the step of f) permanently connecting a processing unit support arm (90) with said first hub (2).

7. The method according to Claim 6, wherein said step f) of permanently connecting a processing unit support arm (90) with said first hub (2) comprises a step of g) providing a respective fixing portion (42')integral with said processing unit support arm (90) and defining a fillable volume (22') for engagement with said first hub (2).

8. Modular support structure (1) for an item-processing machine comprising:
- at least a first and a second hub (2, 2') adapted to bear a respective shaft (3, 3') with which a moving member of an item-processing machine is to be operatively coupled; and
- a plurality of link elements (4, 4') adapted to be arranged transversely with respect to the axes of said hubs (2, 2') and fixable at their respective ends to a relative pair of hubs (2, 2'); said link elements (4, 4') being adapted to engage with the respective hubs (2, 2') at which they are to be fixed; **characterised in that** said hubs (2, 2') are integrally provided with respective fixing portions (20; 26,27) and said link elements are integrally provided with respective fixing portions (41, 41'; 42, 42'); said fixing portions (20; 26,27; 41, 41'; 42, 42') defining respective volumes (22; 49) each adapted to receive in loose engagement a respective fixing portion (20; 26,27; 41, 41'; 42, 42') and fillable with a curable resin for permanent cementation of said hubs (2, 2') with said link elements (4, 4'), so as to form an integral support structure for said item processing machine.

9. The modular support structure according to Claim 8, wherein said first hub (2) is a carousel boss hub adapted to support a carousel of said item processing machine.

10. The modular support structure according to Claim 9, wherein said first hub (2) comprises a central hub boss (25) arranged between an upper and a lower flanges (26, 27) projecting radially outwardly from said central hub boss and defining fixing portions of said hub (2).

11. The modular support structure according to any one of Claims 8 to 10, wherein said second hub (2') is adapted to rotatably bear and support a conveying means of said item processing machine.

12. The modular support structure according to any one of Claims 8 to 11, wherein said fillable volumes (22) are defined externally with respect to a peripheral wall (21) of said hub (2').

13. The modular support structure according to any one of Claims 8 to 11, wherein said fillable volumes (22) are defined internally with respect to a peripheral wall (21) of one said second hub (2').

14. The modular support structure according to any one of Claims 8 to 13, comprising an arm (90) for supporting a processing unit of said item processing machine, said arm (90) for being cantilevered from said first hub (2) and comprising a fixing portion (42') having a box-shaped member (43) defining a said fillable volume (22') for engagement with said first hub (2).

15. The modular support structure according to Claim 13, wherein said box-shaped member (43) is adapted to receive at least one fastening means (80) when engaging in loose fashion with said first hub (2).

16. A kit for assembling a support structure for an item processing machine, comprising a modular support structure (1) according to any one of Claims 8 to 15 and a jig plate (5) having a plurality of means (50, 50') each of which defines precisely the definitive boss position of a respective hub (2, 2') within said modular support structure (1).

## Patentansprüche

1. Ein Verfahren zum Zusammenbau einer modularen Tragestruktur (1) einer Behandlungsmaschine für Gegenstände, wobei die Struktur (1) zumindest eine erste sowie eine zweite Nabe (2, 2') zum Aufnehmen einer jeweiligen Welle (3, 3') umfasst, mit der ein bewegliches Element einer Behandlungsmaschine für Gegenstände operativ gekoppelt werden soll, sowie eine Vielzahl von Verbindungselementen (4, 4'), die quer relativ zu den Achsen der Naben (2, 2') angeordnet werden können und an ihren jeweiligen Enden an einem dazugehörigen Paar Naben (2, 2') fixierbar sind, wobei die Verbindungselemente (4, 4') mit den jeweiligen Naben (2, 2'), an denen sie fixierbar sind, in Eingriff bringbar sind, wobei das Verfahren durch die folgenden Schritte gekennzeichnet ist:
a) Bereitstellen einer tolerierten Aufspannplatte (5) mit einer Vielzahl von Mitteln (50, 50') zur präzisen Festlegung der endgültigen Lagerposition der jeweiligen Naben (2, 2') innerhalb der modularen Tragestruktur (1);
b) Bereitstellen von Fixierabschnitten (20; 26, 27), die einstückig mit den Naben (2, 2') sind und Fixierabschnitten (41, 41'; 42, 42'), die einstückig mit den Verbindungselementen (4, 4') sind, wobei die Fixierabschnitte (20; 26, 27; 41, 41'; 42, 42') zumindest ein Volumen (22; 49) definieren, das zur Aufnahme eines jeweiligen Fixierabschnitts in losem Eingriff dient und mit einem aushärtbaren Harz füllbar ist;
c) Anordnen von Naben (2; 2') an ihren jeweiligen, von den Lagerpositions-Festlegungsmitteln (50, 50') festgelegten Lagerpositionen der Aufspannplatte (5);
d) Anordnen der Verbindungselemente (4, 4') in losem Eingriff mit den Naben (2, 2') zur Bildung eines temporären Gerüstes einer modularen Tragestruktur; und
e) dauerhaftes Fixieren der Verbindungselemente (4, 4') an jeweiligen Fixierabschnitten der Naben (2, 2') mittels Einspritzen und anschließendem Härten eines aushärtbaren Harzes, wodurch aus dem temporären Gerüst eine einstückige Tragestruktur erreicht wird.

2. Das Verfahren gemäß Anspruch 1, wobei der Schritt d) bezüglich des Anordnens der Verbindungselemente (4, 4') in losem Eingriff mit den Naben (2, 2') die Bereitstellung von Befestigungsmitteln (80; 42) zur losen Verbindung von miteinander in Eingriff stehenden Fixierabschnitten (20; 26, 27; 41, 41'; 42, 42') umfasst.

3. Das Verfahren gemäß Anspruch 1 oder 2, wobei der Schritt c) bezüglich des Anordnens der Naben (2, 2') an ihren jeweiligen, durch die Lagerpositions-Festlegungsmittel (50, 50') der Aufspannplatte (5) festgelegten Lagerpositionen die Bereitstellung von temporären Trageelementen (60, 61, 62) für die Naben (2, 2') umfasst.

4. Das Verfahren gemäß Anspruch 3, wobei der Schritt c) bezüglich ferner die Bereitstellung von Spannmitteln zur provisorischen Befestigung der Naben (2; 2') an ihren jeweiligen Lagerpositionen und oder der Verbindungselemente (4, 4') in loser Verbindung mit den jeweiligen Naben (2; 2') umfasst.

5. Das Verfahren gemäß einem der Ansprüche 1 bis 4, wobei der Schritt c) bezüglich des Anordnens der Naben (2, 2') an ihren jeweiligen, durch die Lagerpositions-Festlegungsmittel (50, 50') der Aufspannplatte (5) festgelegten Lagerpositionen und der Schritt d) bezüglich des Anordnens der Verbindungselemente (4, 4') in losem Eingriff mit den Naben (2, 2') das Anordnen der Naben (2, 2') und Verbindungselemente (4, 4') in einer umgekehrten Position umfasst.

6. Das Verfahren gemäß einem der Ansprüche 1 bis 5, umfassend den Schritt f) des dauerhaften Verbindens eines Bearbeitungseinheits-Tragearm (90) mit der ersten Nabe (2).

7. Das Verfahren gemäß Anspruch 6, wobei der Schritt f) bezüglich des dauerhaften Verbindens eines Bearbeitungseinheits-Tragearms (90) mit der ersten Nabe (2) einen Schritt g) des Bereitstellens eines jeweiligen Fixierabschnitts (42') umfasst, der einstückig mit dem Bearbeitungseinheits-Tragearm (90) ist und ein füllbares Volumen (22') zum Eingriff mit der ersten Nabe (2) begrenzt.

8. Modulare Tragestruktur (1) für eine Behandlungsmaschine für Gegenstände, umfassend:
- zumindest eine erste sowie eine zweite Nabe (2, 2') zum Aufnehmen einer jeweiligen Welle (3, 3') umfasst, mit der ein bewegliches Element einer Behandlungsmaschine für Gegenstände operativ gekoppelt werden soll, und
- eine Vielzahl von Verbindungselementen (4, 4'), die quer relativ zu den Achsen der Naben (2, 2') angeordnet werden können und an ihren jeweiligen Enden an einem dazugehörigen Paar Naben (2, 2') fixierbar sind, wobei die Verbindungselemente (4, 4') mit den jeweiligen Naben (2, 2'), an denen sie fixierbar sind, in Eingriff bringbar sind, **dadurch gekennzeichnet, dass** die Naben (2, 2') einstückig mit jeweiligen Fixierabschnitten (20; 26, 27) ausgeführt sind und die Verbindungselemente einstückig mit jeweiligen Fixierabschnitten (41, 41'; 42, 42') ausgeführt sind, wobei die Fixierabschnitte (20; 26, 27; 41, 41'; 42, 42') jeweilige Volumina (22; 49) begrenzen, die jeweils einen jeweiligen Fixierabschnitt (20; 26, 27; 41, 41'; 42, 42') in losem Eingriff aufnehmen können und zur dauerhaften Zementierung der Naben (2, 2') mit den Verbindungselementen (4, 4') mit einem aushärtbaren Harz füllbar sind, so dass eine einstückige Tragestruktur für die Behandlungsmaschine für Gegenstände gebildet wird.

9. Die modulare Tragestruktur gemäß Anspruch 8, wobei die erste Nabe (2) eine Karussell-Lagernabe zum Tragen eines Karussells der Behandlungsmaschine für Gegenstände ist.

10. Die modulare Tragestruktur gemäß Anspruch 9, wobei die erste Nabe (2) ein zentrales Nabenlager (25) umfasst, das zwischen einem oberen und einem unteren Flansch (26, 27) angeordnet ist, die von dem zentralen Nabenlager (25) nach radial außen vorspringen und Fixierabschnitte der Nabe (2) festlegen.

11. Die modulare Tragestruktur gemäß einem der Ansprüche 8 bis 10, wobei die zweite Nabe (2') dazu dient, ein Fördermittel der Bearbeitungsmaschine für Gegenstände drehbar aufzunehmen und zu tragen.

12. Die modulare Tragestruktur gemäß einem der Ansprüche 8 bis 11, wobei die füllbaren Volumina (22) nach außen bezüglich einer Umgebungswand (21) der Nabe (2') begrenzt sind.

13. Die modulare Tragestruktur gemäß einem der Ansprüche 8 bis 11, wobei die füllbaren Volumina (22) nach innen bezüglich einer Umgebungswand (21) der einen zweiten Nabe (2') begrenzt sind.

14. Die modulare Tragstruktur gemäß einem der Ansprüche 8 bis 13, umfassend einen Arm (90) zum Tragen einer Bearbeitungseinheit der Bearbeitungsmaschine für Gegenstände, wobei der Arm (90) von der ersten Nabe (2) auskragend absteht und einen Fixierabschnitt (42') mit einem kastenförmigen Element (43) umfasst, der das füllbare Volumen (22') für den Eingriff mit der ersten Nabe (2) begrenzt.

15. Die modulare Tragstruktur gemäß Anspruch 13, wobei das kastenförmige Element (43) zur Aufnahme zumindest eines Befestigungsmittels (80) dient, wenn es lose mit der ersten Nabe (2) in Eingriff steht.

16. Ein Set für den Zusammenbau einer Tragstruktur einer Bearbeitungsmaschine für Gegenstände, umfassend eine modulare Tragstruktur (1) gemäß einem der Ansprüche 8 bis 15 sowie eine Aufspannplatte (5) mit einer Vielzahl von Mitteln (50, 50'), die jeweils die endgültige Lagerposition einer jeweiligen Nabe (2, 2') innerhalb der modularen Tragestruktur (1) genau festlegt.

## Revendications

1. Procédé pour assembler une structure de support modulaire (1) d'une machine de traitement d'articles ; ladite structure (1) comprenant au moins un premier et un second moyeu (2, 2') adaptés pour supporter un arbre (3, 3') respectif avec lequel un élément de déplacement d'une machine de traitement d'articles doit être couplé de manière opérationnelle, et une pluralité d'éléments de liaison (4, 4') adaptés pour être agencés transversalement par rapport aux axes desdits moyeux (2, 2') et pouvant être fixés au niveau de leurs extrémités respectives à une paire relative desdits moyeux (2, 2') ; lesdits éléments de liaison (4, 4') étant adaptés pour se mettre en prise avec les moyeux (2, 2') respectifs avec auxquels ils sont adaptés pour y être fixés ; le procédé étant **caractérisé en ce qu'**il comprend les étapes consistant à :
a) prévoir une plaque de gabarit à tolérances (5) ayant une pluralité de moyens (50, 50') pour définir précisément la position de bossage définitive desdits moyeux (2, 2') respectifs à l'intérieur de ladite structure de support modulaire (1) ;
b) prévoir des parties de fixation (20 ; 26, 27) solidaires avec lesdits moyeux (2, 2') et des parties de fixation (41, 41' ; 42, 42') solidaires avec lesdits éléments de liaison (4, 4'), lesdites parties de fixation (20 ; 26, 27 ; 41, 41' ; 42, 42') définissant au moins un volume (22 ; 49) adapté pour recevoir en mise en prise sans serrage une partie de fixation respective et pouvant être rempli avec une résine durcissable ;
c) agencer des moyeux (2, 2') au niveau de leurs positions de bossage respectives définies par lesdits moyens de définition de position de bossage (50, 50') de ladite plaque de gabarit (5) ;
d) agencer lesdits éléments de liaison (4, 4') en mise en prise sans serrage avec lesdits moyeux (2, 2'), afin de former un squelette temporaire d'une structure de support modulaire ; et
e) fixer de manière permanente lesdits éléments de liaison (4, 4') sur des parties de fixation respective des moyeux (2, 2') via l'injection et le durcissement ultérieur d'une résine durcissable, obtenant ainsi, à partir dudit squelette temporaire, une structure de support solidaire.

2. Procédé selon la revendication 1, dans lequel l'étape d) consistant à agencer lesdits éléments de liaison (4, 4') en mise en prise sans serrage avec lesdits moyeux (2, 2') comprend l'étape consistant à prévoir des moyens de fixation (80 ; 42) pour raccorder sans serrage des parties de fixation (20 ; 26, 27 ; 41, 41' ; 42, 42') mutuellement en mise en prise.

3. Procédé selon la revendication 1 ou 2, dans lequel l'étape c) consistant à agencer lesdits moyeux (2, 2') au niveau de leurs positions de bossage respectives définies par lesdits moyens de définition de position de bossage (50, 50') de ladite plaque de gabarit (5) comprend l'étape consistant à prévoir des éléments de support temporaires (60, 61, 62) pour lesdits moyeux (2, 2').

4. Procédé selon la revendication 3, dans lequel ladite étape c) comprend en outre l'étape consistant à prévoir des moyens de serrage pour fixer provisoirement lesdits moyeux (2, 2') dans leurs positions de bossage respectives et/ou lesdits éléments de liaison (4, 4') en mise en prise sans serrage avec les moyeux (2, 2') respectifs.

5. Procédé selon l'une quelconque des revendications 1 à 4, dans lequel l'étape c) consistant à agencer lesdits moyeux (2, 2') au niveau de leurs positions de bossage respectives définies par lesdits moyens de définition de position de bossage (50, 50') de ladite plaque de gabarit (5) et l'étape d) consistant à agencer lesdits éléments de liaison (4, 4') en mise en prise sans serrage avec lesdits moyeux (2, 2') comprennent l'étape consistant à agencer lesdits moyeux (2, 2') et les éléments de liaison (4, 4') dans une position inversée.

6. Procédé selon l'une quelconque des revendications 1 à 5, comprenant l'étape f) consistant à raccorder de manière permanente un bras de support d'unité de traitement (90) avec ledit premier moyeu (2).

7. Procédé selon la revendication 6, dans lequel ladite étape f) consistant à raccorder de manière permanente un bras de support d'unité de traitement (90) avec ledit premier moyeu (2) comprend une étape g) consistant à prévoir une partie de fixation (42') respective solidaire avec ledit bras de support d'unité de traitement (90) et définissant un volume remplissable (22') pour la mise en prise avec ledit premier moyeu (2).

8. Structure de support modulaire (1) pour une machine de traitement d'articles comprenant :
au moins un premier et un second moyeu (2, 2') adaptés pour supporter un arbre (3, 3') respectif avec lequel un élément de déplacement d'une machine de traitement d'articles doit être couplé de manière opérationnelle ; et
une pluralité d'éléments de liaison (4, 4') adaptés pour être agencés transversalement par rapport aux axes desdits moyeux (2, 2') et pouvant être fixés au niveau de leurs extrémités respectives à une paire relative de moyeux (2, 2') ; lesdits éléments de liaison (4, 4') étant adaptés pour se mettre en prise avec les moyeux (2, 2') respectifs auxquels ils doivent être fixés ; **caractérisé en ce que** lesdits moyeux (2, 2') sont prévus de manière solidaire avec des parties de fixation (20 ; 26, 27) respectives et lesdits éléments de liaison sont prévus de manière solidaire avec des parties de fixation (41, 41' ; 42, 42') respectives ; lesdites parties de fixation (20 ; 26, 27 ; 41, 41' ; 42, 42') définissant des volumes (22 ; 49) respectifs, chacun adapté pour recevoir en mise en prise sans serrage une partie de fixation (20 ; 26, 27 ; 41, 41' ; 42, 42') respective et pouvant être remplis avec une résine durcissable pour la cémentation permanente desdits moyeux (2, 2') avec lesdits éléments de liaison (4, 4'), afin de former une structure de support solidaire pour ladite machine de traitement d'articles.

9. Structure de support modulaire selon la revendication 8, dans laquelle ledit premier moyeu (2) est un moyeu de bossage de carrousel adapté pour supporter un carrousel de ladite machine de traitement d'articles.

10. Structure de support modulaire selon la revendication 9, dans laquelle ledit premier moyeu (2) comprend un bossage de moyeu central (25) agencé entre un rebord supérieur et un rebord inférieur (26, 27) faisant saillie radialement vers l'extérieur à partir dudit bossage de moyeu central et définissant des parties de fixation dudit moyeu (2).

11. Structure de support modulaire selon l'une quelconque des revendications 8 à 10, dans laquelle ledit second moyeu (2') est adapté pour porter en rotation et supporter un moyen de transport de ladite machine de traitement d'articles.

12. Structure de support modulaire selon l'une quelconque des revendications 8 à 11, dans laquelle lesdits volumes pouvant être remplis (22) sont définis extérieurement par rapport à une paroi périphérique (21) dudit moyeu (2').

13. Structure de support modulaire selon l'une quelconque des revendications 8 à 11, dans laquelle lesdits volumes pouvant être remplis (22) sont définis intérieurement par rapport à une paroi périphérique (21) dudit second moyeu (2').

14. Structure de support modulaire selon l'une quelconque des revendications 8 à 13, comprenant un bras (90) pour supporter une unité de traitement de ladite machine de traitement d'articles, ledit bras (90) étant prévu pour être en porte-à-faux par rapport audit premier moyeu (2) et comprenant une partie de fixation (42') ayant un élément en forme de boîte (43) définissant ledit volume pouvant être rempli (22') pour la mise en prise avec ledit premier moyeu (2).

15. Structure de support modulaire selon la revendication 13, dans laquelle ledit élément en forme de boîte (43) est adapté pour recevoir au moins un moyen de fixation (80) lors de la mise en prise sans serrage avec ledit premier moyeu (2).

16. Kit pour assembler une structure de support pour une machine de traitement d'articles, comprenant une structure de support modulaire (1) selon l'une quelconque des revendications 8 à 15 et une plaque de gabarit (5) ayant une pluralité de moyens (50, 50'), dont chacun définit précisément la position de bossage définitive d'un moyeu (2, 2') respectif à l'intérieur de ladite structure de support modulaire (1).
